# FASCICULE DE BREVET EUROPEEN

(11) **EP 3 898 413 B1**
(45) Date de publication et mention de la délivrance du brevet: **19.07.2023**
(21) Numéro de dépôt: 19817700.8
(22) Date de dépôt: 10.12.2019
(51) Int. Cl.: B64D 11/00, B64D 11/06

(54) **DISPOSITIF DE FERMETURE D'UN PASSAGE ENTRE DEUX UNITÉS DE SIÈGES**
VORRICHTUNG ZUM SCHLIESSEN EINER PASSAGE ZWISCHEN ZWEI SITZEN
DEVICE FOR CLOSING A PASSAGE BETWEEN TWO SEAT UNITS

(30) Priorité: 18.12.2018 FR 1873133
(43) Date de publication de la demande: 27.10.2021
(73) Titulaire: Safran Seats, 78370 Plaisir (FR)
(72) Inventeur: THOMAS, Mathieu, 18000 BOURGES (FR); PERRIN, Lorene, 18400 ST FLORENT SUR CHER (FR); LAYET, Julien, 33700 MERIGNAC (FR)
(74) Mandataire: Marconnet, Sébastien
(86) Numéro de dépôt international: PCT/EP2019/084498
(87) Numéro de publication internationale: WO 2020/126696

(56) Documents cités:
- WO-A1-2016/164352
- WO-A1-2017/066559
- WO-A1-2018/033599
- WO-A1-2018/184778

## Description

La présente invention porte sur un dispositif de fermeture d'un passage entre deux unités de sièges. L'invention trouve une application particulièrement avantageuse dans le domaine des aéronefs.

Les sièges de type "classe affaires" et "première classe" offrent aux passagers différentes positions de confort, d'une position "assise" jusqu'à une position "couchée", dans laquelle le siège définit un plan de couchage sensiblement horizontal pour que le passager puisse s'allonger.

Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut alors rester sur le siège lors de transitions entre les différentes positions.

Le siège est généralement constitué notamment du dossier et d'une assise et est susceptible de comprendre un repose-jambes et/ou un repose-pieds, pouvant être fixes ou liés à une cinématique du siège.

Les agencements de sièges pour cabine d'avion de type "classe affaires" et "première classe" comprennent un passage, disposé entre deux unités de sièges agencées l'une derrière l'autre selon un axe longitudinal de la cabine de l'avion, permettant un accès direct à un couloir de circulation pour tous les passagers. Les passagers peuvent ainsi accéder facilement au couloir de circulation, notamment lorsque le siège est en position "couchée".

De ce fait, lorsqu'un passager ou un personnel de bord marche dans le couloir de circulation situé latéralement par rapport au siège, il est susceptible d'être en contact visuel direct avec le passager assis dans le siège. Une telle situation peut apporter un sentiment d'inconfort pour le passager assis, en ce sens qu'il ressent une absence d'intimité.

Le document US2018/0281963 décrit un dispositif de fermeture d'un passage entre deux unités de sièges agencées l'une derrière l'autre. Ce dispositif de fermeture comporte une porte montée coulissante entre une position stockée, dans laquelle la porte laisse le passage dégagé, et une position déployée, dans laquelle la porte obture le passage. Une telle configuration permet de définir un espace intérieur clos autour du siège procurant un sentiment d'intimité au passager. Une telle configuration selon l'état de la technique permet au passager assis sur le siège d'éviter d'être à la vue directe des autres passagers et/ou personnels de bord marchant dans le couloir de circulation. Les documents EP3225548 et GB2548901 décrivent un dispositif de fermeture analogue.

En cas de dysfonctionnement de tels dispositifs, le passager peut faire pivoter la porte suivant une charnière verticale pour dégager l'espace entre les sièges et accéder au couloir de circulation. Toutefois, dans une telle configuration, la porte est susceptible d'entraver le passage lorsqu'elle est pivotée par rapport à sa position habituelle.

Le document WO2018184778 A1 décrit un dispositif de fermeture, notamment d'un passage ménagé dans une cabine d'un aéronef, comportant un moyen de support, apte à coulisser le long d'une glissière suivant une direction de coulissement, une paroi de fermeture, apte à obturer le passage, et un système de verrouillage, apte à prendre un état verrouillé, dans lequel le système de verrouillage assure une liaison mécanique entre la paroi de fermeture et le moyen de support, de sorte que la paroi de fermeture est mobile avec le moyen de support, suivant la direction de coulissement. En cas de dysfonctionnement, le système de verrouillage est apte à passer dans un état déverrouillé, dans lequel la paroi de fermeture est désolidarisée du moyen de support, de sorte que la paroi de fermeture est seule mobile suivant la direction de coulissement.

L'invention vise à remédier efficacement à ces inconvénients en proposant un dispositif de fermeture, notamment d'un passage situé dans une cabine d'un aéronef, comportant:
- un panneau de porte, et
- un premier chariot comprenant des premiers moyens de guidage pour guider en translation ledit premier chariot par rapport à un élément fixe suivant une direction de coulissement, et en ce que ledit premier chariot comporte des deuxièmes moyens de guidage pour guider en translation le panneau de porte par rapport audit premier chariot suivant ladite direction de coulissement, et
- un premier système de verrouillage apte à prendre un état verrouillé, dans lequel le premier système de verrouillage assure une liaison mécanique entre le panneau de porte et le premier chariot, de sorte que le panneau de porte est mobile en translation avec le premier chariot via lesdits premiers moyens de guidage, caractérisé en ce que ledit premier système de verrouillage étant apte à passer dans un état déverrouillé, notamment en cas de dysfonctionnement, dans lequel le panneau de porte est désolidarisé du premier chariot, de sorte que le panneau de porte est seul mobile en translation via lesdits deuxièmes moyens de guidage.

L'invention pourra mettre en œuvre un premier et un deuxième systèmes de verrouillage qui se trouvent à l'état verrouillé en condition d'utilisation par le passager de façon respectivement à solidariser le panneau de porte avec le chariot de déplacement et autoriser l'engrènement du pignon d'amortissement avec une crémaillère. Ces systèmes de verrouillage peuvent passer à l'état déverrouillé en situation d'urgence pour permettre le dégagement du panneau de porte par rapport au passage suivant un mouvement de translation. En outre, un système de blocage utilisable par le personnel de bord pourra permettre de bloquer le déploiement du panneau de porte lorsque le siège se trouve en position TTL (Taxi-Take off-Landing).

L'invention permet ainsi, en autorisant le coulissement du panneau de porte en cas de dysfonctionnement du dispositif de fermeture, d'éviter d'entraver le chemin des passagers en cas de procédure d'évacuation. En outre, la présence des deuxièmes moyens de guidage facilite le déplacement du panneau de porte en cas d'urgence ainsi que son remontage dans un mode de fonctionnement normal.

Selon une réalisation, les premiers moyens de guidage comportent un dispositif à glissière.

Selon une réalisation, les deuxièmes moyens de guidage comportent une rainure de guidage ménagée dans l'un des éléments parmi le chariot et le panneau de porte et une portion mâle de forme complémentaire ménagée dans l'autre des éléments parmi ledit premier chariot et le panneau de porte.

Selon une réalisation, la rainure de guidage présente une section en forme de queue d'aronde.

Selon une réalisation, le premier système de verrouillage comporte une came rotative, ladite came étant disposée à l'intérieur d'un logement dans lequel débouche une rainure de dégagement.

Selon une réalisation, la came est mobile entre:
- une position de verrouillage dans laquelle ladite came vient en butée contre une extrémité de la rainure de dégagement, et
- une position de déverrouillage dans laquelle un axe de la came est aligné avec un axe de la rainure de dégagement pour permettre un déplacement relatif du panneau de porte par rapport au premier charriot.

Selon une réalisation, ledit dispositif de fermeture comporte un deuxième chariot muni d'un pignon d'amortissement pour amortir et réguler la vitesse d'un déplacement du panneau de porte destiné à coopérer avec une crémaillère montée sur un élément fixe.

Selon une réalisation, le deuxième chariot comporte des moyens de guidage verticaux pour guider en translation verticale ledit deuxième chariot par rapport au panneau de porte et un deuxième système de verrouillage apte à prendre un état verrouillé dans lequel ledit système de verrouillage assure un maintien du deuxième chariot dans une position haute de sorte que des dents du pignon d'amortissement coopèrent avec la crémaillère, et un état déverrouillé autorisant un déplacement dudit deuxième chariot vers une position basse de sorte que les dents du pignon d'amortissement sont dégagés de la crémaillère.

Selon une réalisation, le deuxième système de verrouillage comporte une came et une échancrure correspondante ménagée dans le panneau de porte, ladite came étant mobile en rotation entre une première position dans laquelle une première portion périphérique de la came est en appui avec une extrémité haute de l'échancrure de sorte que le deuxième chariot se trouve en position haute et une deuxième position dans laquelle une deuxième portion périphérie de la came est en appui avec l'extrémité haute de l'échancrure de sorte que le deuxième chariot se trouve en position basse.

Selon une réalisation, ledit dispositif de fermeture comporte un dispositif de commande, notamment à câbles et moyens de commande en déplacement, pour commander un déplacement d'au moins une came d'une position à une autre. Le dispositif de commande permet de réamorcer le système et retrouver le mode de déploiement initial.

Selon une réalisation, ledit dispositif de fermeture comporte un système de blocage du panneau de porte dans la position stockée.

Selon une réalisation, le système de blocage comporte un actionneur électrique linéaire ayant une tige mobile en translation entre une position libérée dans laquelle la tige est dégagée d'un logement correspondant ménagé dans une portion du premier chariot et une position de blocage dans laquelle la tige coopère avec le logement du premier chariot pour empêcher un déplacement du panneau de porte. Un tel système permet de bloquer le déploiement du panneau de porte, mais autorise dans tous les cas la réouverture du panneau de porte et son maintien en position ouverte (stockée).

Selon une réalisation, ledit dispositif de fermeture comporte un dispositif de déploiement automatique du panneau de porte d'une position stockée vers une position déployée.

Selon une réalisation, le dispositif de déploiement automatique comprend une sangle élastique ainsi qu'une pluralité de moyens de guidage de ladite sangle, tels que des poulies, disposés entre une première extrémité de ladite sangle fixée sur le panneau de porte et une deuxième extrémité de ladite sangle fixée sur une partie fixe.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1a] [Fig. 1b] Les figures 1a et 1b sont des vues de côté illustrant un dispositif de fermeture selon l'invention respectivement en position stockée et en position déployée;
[Fig. 2] La figure 2 est une vue en perspective d'une unité de siège pouvant être utilisée avec le dispositif de fermeture selon l'invention;
[Fig.3] La figure 3 est une vue de côté d'un dispositif de fermeture selon l'invention;
[Fig. 4] La figure 4 est une vue en perspective détaillée du premier chariot du dispositif de fermeture selon l'invention;
[Fig. 5a] [Fig. 5b] Les figures 5a et 5b sont des vues en perspective illustrant respectivement un état verrouillé et un état déverrouillé du système de verrouillage du premier chariot du dispositif de fermeture;
[Fig. 6] La figure 6 montre une vue détaillée illustrant un déplacement de la came du système de verrouillage à l'intérieur de la rainure de dégagement;
[Fig. 7] La figure 7 montre une vue en perspective du deuxième chariot du dispositif de fermeture selon l'invention muni d'un pignon d'amortissement coopérant avec une crémaillère;
[Fig. 8] La figure 8 est une vue en perspective du deuxième chariot du dispositif de fermeture selon l'invention;
[Fig. 9a] [Fig. 9b] Les figures 9a et 9b sont des vues suivant deux côtés différents du deuxième chariot du dispositif illustrant le passage de la position haute à la position basse du chariot pour dégager les dents du pignon par rapport à la crémaillère;
[Fig. 10] La figure 10 montre une vue en perspective d'un premier mode de réalisation d'un système de blocage du panneau de porte selon l'invention;
[Fig. 11a] [Fig. 11b] Les figures 11a et 11b montrent une vue en perspective d'un deuxième mode de réalisation d'un système de blocage du panneau de porte selon l'invention respectivement en position de blocage et en position libérée;
[Fig. 12a] [Fig. 12b] Les figures 12a et 12b montrent des vues de côté illustrant le fonctionnement d'un système de déploiement automatique du panneau de porte de la position stockée vers la position déployée;
[Fig. 13] La figure 13 est une représentation schématique d'un organe de déverrouillage du panneau de porte intégré dans une poignée.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

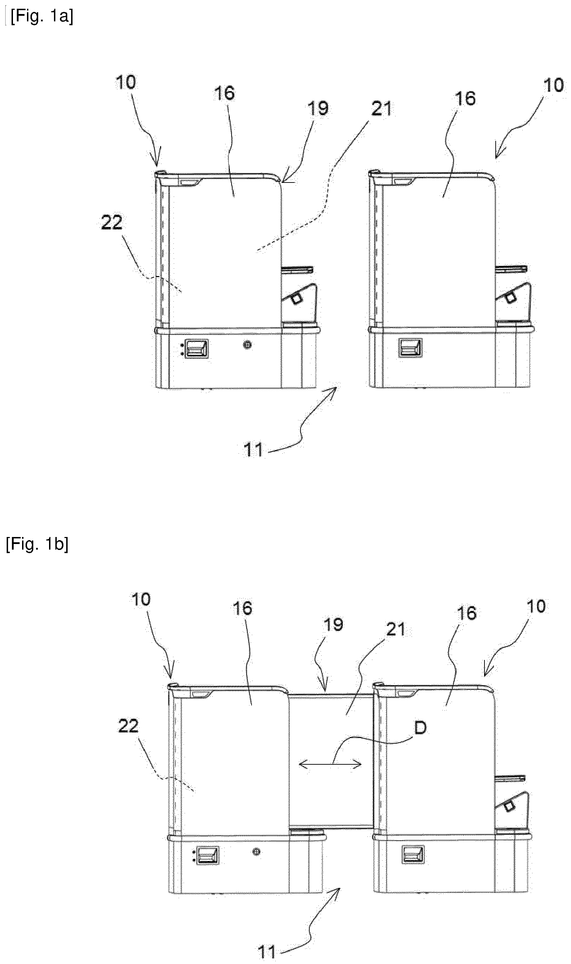

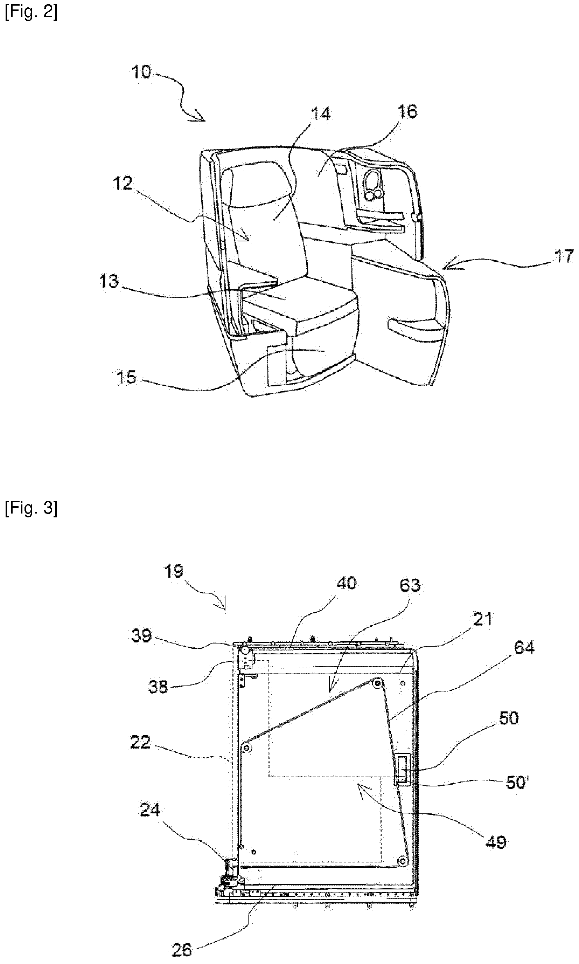

Les figures 1a et 1b montrent deux unités de sièges 10 consécutives séparées entre elles par un passage 11. On rappelle qu'une unité de siège 10 comporte un siège 12 ayant une assise 13, un dossier 14, et le cas échéant un repose-jambes 15, tel que montré sur la figure 2. L'unité de siège 10 comporte également une coque d'intimité 16 entourant au moins en partie le siège 12 ainsi qu'une console 17 formant notamment un espace de rangement pour le passager. Le passage 11 est agencé de sorte à permettre une circulation du passager du siège vers un couloir de circulation.

Un dispositif de fermeture 19 est apte à assurer la fermeture du passage 11. Un tel dispositif de fermeture 19 permet ainsi de définir, notamment en coopération avec la coque fixe 16 et/ou la console 17 de l'unité de siège 10 avant, un espace clos autour du siège 12.

Lorsque le dispositif de fermeture 19 est déployé, le passage 11 séparant deux unités de sièges 10 consécutives est clos par le dispositif de fermeture 19. Le dispositif de fermeture 19 est susceptible de se déplacer selon une direction de coulissement rectiligne D.

En conséquence, le passager assis dans le siège 12 est séparé de tout passager et/ou personnel de bord marchant dans le couloir de circulation par le dispositif de fermeture 19. Le passager se retrouve ainsi assis dans une zone d'intimité définie par l'espace clos ainsi créé.

Plus précisément, le dispositif de fermeture 19 comporte un panneau de porte 21 mobile entre une position stockée et une position déployée selon la direction D. Dans la position stockée, le panneau de porte 21 se situe en majorité dans un logement 22 ménagé dans la coque 16 d'une unité de siège 10 de façon à libérer le passage 11, tel que montré sur la figure 1a. Dans la position déployée, une majeure partie du panneau de porte 21 se situe à l'extérieur du logement 22, de façon à obturer le passage 11, tel que montré sur la figure 1b.

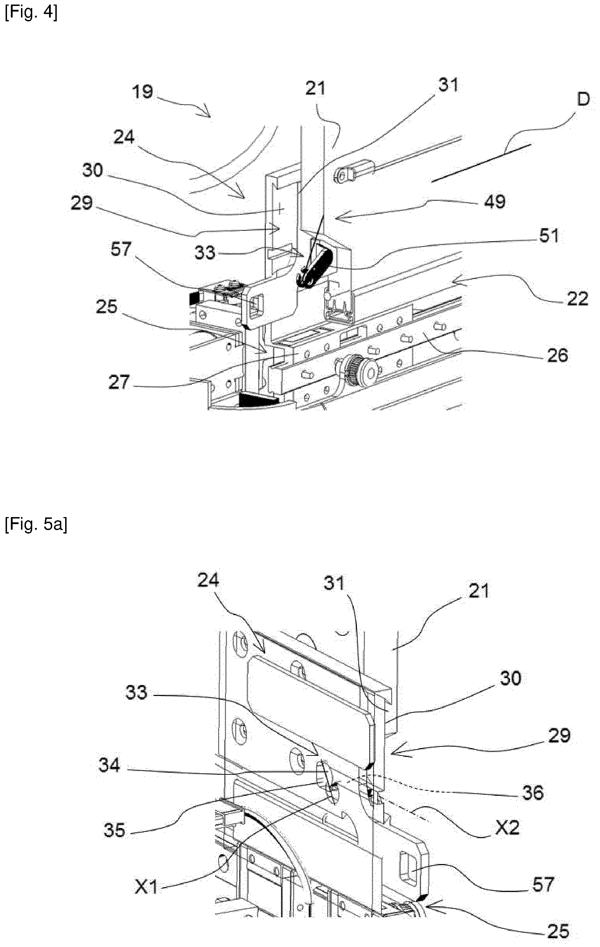

Comme on peut le voir sur la figure 3 et plus particulièrement sur la figure 4, un premier chariot 24 comprend des premiers moyens de guidage 25 pour guider en translation ledit chariot 24 par rapport à un élément fixe de l'unité de siège 10 suivant la direction de coulissement D. Les premiers moyens de guidage 25 comportent un dispositif à glissière ayant une glissière longitudinale 26 fixée sur l'élément fixe de l'unité de siège, notamment disposé à l'intérieur du logement 22, et coopérant avec une forme complémentaire 27 ménagée dans le chariot 24.

Le chariot 24 comporte en outre des deuxièmes moyens de guidage 29 pour guider en translation le panneau de porte 21 par rapport au chariot 24 suivant la direction de coulissement D. Les deuxièmes moyens de guidage 29 comportent une rainure de guidage 30 ménagée dans le chariot 24 et une portion mâle 31 de forme complémentaire ménagée dans le panneau de porte 21. En variante, la structure pourra bien entendu être inversée, c'est-à-dire que la rainure de guidage 30 pourra être ménagée dans le panneau de porte 21 et la portion mâle 31 complémentaire pourra être prévue dans le chariot 24.

La rainure de guidage 30 présente une section en forme de queue d'aronde, c'est-à-dire une section de forme globalement trapézoïdale, pour garantir un maintien de la portion mâle 31 à l'intérieur de la rainure de guidage 30. En variante, toute autre forme de la rainure 30 adaptée à l'application est envisageable.

Un premier système de verrouillage 33 est apte à prendre un état verrouillé, dans lequel ledit système de verrouillage 33 assure une liaison mécanique entre le panneau de porte 21 et le premier chariot 24, de sorte que le panneau de porte 21 est mobile en translation avec le premier chariot 24 via lesdits premiers moyens de guidage 25. Le panneau de porte 21 pourra ainsi être mobile entre la position stockée et la position déployée, via le déplacement du chariot 24. Les deuxièmes moyens de guidage 29 sont alors bloqués par le système de verrouillage 33.

Le système de verrouillage 33 est apte à passer dans un état déverrouillé, notamment en cas de dysfonctionnement du dispositif de fermeture 19, dans lequel le panneau de porte 21 est désolidarisé du chariot 24, de sorte que le panneau de porte 21 est seul mobile en translation de la position déployée vers la position stockée via lesdits deuxièmes moyens de guidage 29.

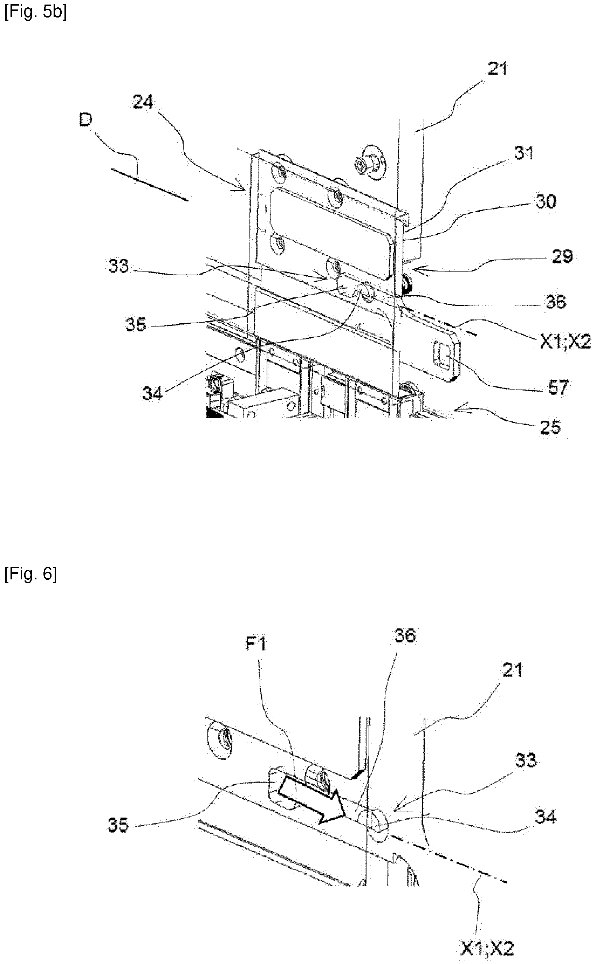

Suivant un exemple de réalisation, le système de verrouillage 33 visible sur les figures 5a, 5b et 6, comporte une came 34 rotative montée sur le panneau de porte 21. La came 34 est disposée à l'intérieur d'un logement 35 dans lequel débouche une rainure de dégagement 36 de forme allongée. La came 34 est mobile en rotation entre une position de verrouillage (correspondant à l'état verrouillé du système 33) et une position de déverrouillage (correspondant à l'état déverrouillé du système 33). Alternativement, la came 34 peut être montée sur le chariot 24 ou toute autre pièce ayant le même mouvement rectiligne que le panneau de porte 21 et/ou le chariot 24.

Dans la position de verrouillage, la came 34 vient en butée contre une extrémité de la rainure de dégagement 36 (cf. figure 5a). Un axe X1 de la came 34 s'étendant suivant sa plus grande dimension n'est alors pas aligné avec un axe X2 de la rainure de dégagement 36. La came 34 étant bloquée en translation d'un côté par l'extrémité de la rainure 36 et de l'autre par un flanc du logement 35, le panneau de porte 21 est solidaire en translation du chariot 24.

Dans la position de déverrouillage activée par un organe de déverrouillage 50' intégré à la poignée 50, l'axe X1 de la came 34 s'aligne avec l'axe X2 de la rainure de dégagement 36, de façon à pouvoir glisser à l'intérieur de la rainure 36 suivant la flèche F1 (cf. figures 5b et 6). Cela permet d'assurer un déplacement relatif du panneau de porte 21 par rapport au charriot 24, de sorte que le panneau de porte 21 est seul mobile entre la position déployée et la position stockée.

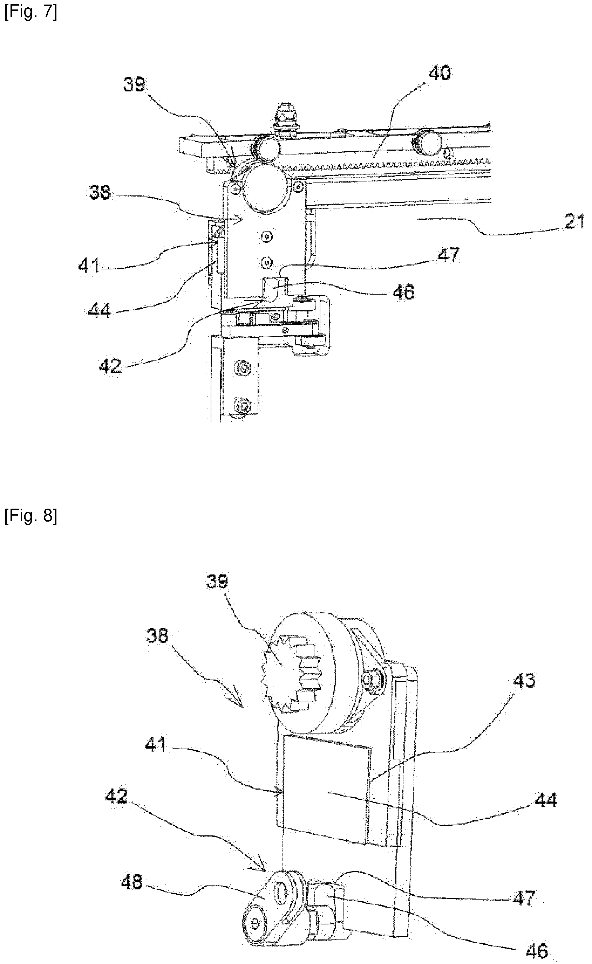

Comme on peut le voir sur les figures 7 et 8, un deuxième chariot 38 est muni d'un pignon d'amortissement 39 du déplacement du panneau de porte 21 destiné à coopérer avec une crémaillère 40 montée sur un élément fixe de l'unité de siège 10. Le pignon d'amortissement 39 pourra prendre la forme d'un pignon à friction de type connu.

Le deuxième chariot 38 comporte des moyens de guidage verticaux 41 pour guider en translation verticale le deuxième chariot 38 par rapport au panneau de porte 21 ainsi qu'un deuxième système de verrouillage 42. Les moyens de guidage verticaux 41 comportent une rainure de guidage 43 ménagée dans le chariot 38 et une portion mâle 44 de forme complémentaire ménagée dans le panneau de porte 21. En variante, la structure pourra bien entendu être inversée, c'est-à-dire que la rainure de guidage 43 pourra être ménagée dans le panneau de porte 21 et la forme complémentaire 44 pourra être prévue dans le chariot 38. Les moyens de guidage verticaux 41 permettent d'assurer un déplacement du chariot 38 suivant une direction perpendiculaire à la direction de coulissement D. La rainure de guidage 43 présente une section en forme de queue d'aronde, c'est-à-dire une section de forme globalement trapézoïdale, pour garantir un maintien de la portion mâle 44 à l'intérieur de la rainure de guidage 43. En variante, toute autre forme de la rainure 43 adaptée à l'application est envisageable.

Le deuxième système de verrouillage 42 est apte à prendre un état verrouillé dans lequel ledit système de verrouillage 42 assure un maintien du deuxième chariot 38 dans une position haute, de sorte que des dents du pignon d'amortissement 39 coopèrent avec la crémaillère 40, et un état déverrouillé autorisant un déplacement du deuxième chariot 38 vers une position basse, via les deuxièmes moyens de guidage 41, de sorte que les dents du pignon d'amortissement 39 sont dégagées de la crémaillère 40. On supprime ainsi l'effort de friction pour permettre un déplacement aisé du chariot 38 de la position déployée vers la position stockée en situation d'urgence.

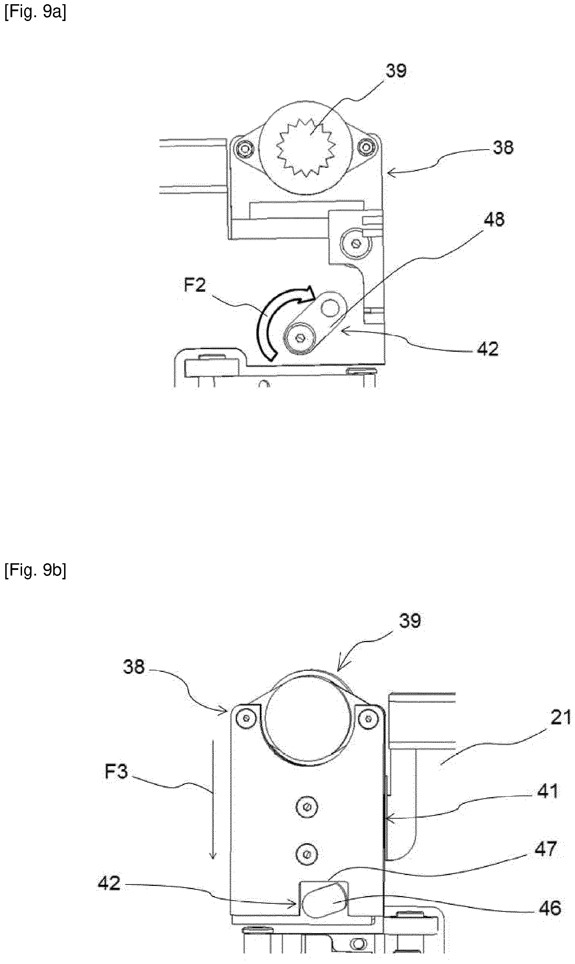

A cet effet, le deuxième système de verrouillage 42 comporte une came 46 et une échancrure 47 correspondante ménagée dans le panneau de porte 21. La came 46 est mobile en rotation entre une première position dans laquelle une première portion périphérique de la came 46 est en appui avec une extrémité haute de l'échancrure 47 de sorte que le chariot 38 se trouve en position haute, tel que montré sur les figures 7 et 8, et une deuxième position dans laquelle une deuxième portion périphérie de la came 46 est en appui avec l'extrémité haute de l'échancrure 47 de sorte que le chariot 38 se trouve en position basse, tel que montré sur la figure 9b. Ainsi, une rotation de la came 46 suivant la flèche F2 par l'intermédiaire d'un bras de commande 48 (cf. figure 9a) permet de faire déplacer verticalement le chariot 38 vers le bas suivant la flèche F3.

Un dispositif de commande 49, notamment à câbles et moyens de commande en déplacement, permet de commander un déplacement des cames d'une position à une autre par actionnement d'un organe de déverrouillage 50', tel qu'un bouton coulissant suivant la flèche F ou un levier, intégré dans une poignée 50 disposée sur un côté du panneau de porte 21, tel que montré sur les figures 3, 4, et 13.

Ainsi, dans un mode de fonctionnement normal, le chariot 24 et le panneau de porte 21 sont mobiles suivant la direction rectiligne de coulissement D tout en ayant un mouvement amorti du panneau de porte 21 en fin de course grâce au pignon d'amortissement 39 en prise avec la crémaillère 40. Les deux systèmes de verrouillage 33, 42 se trouvent alors dans un état verrouillé.

Dans un mode de fonctionnement d'urgence, le passager pourra actionner l'organe de déverrouillage 50' qui aura pour effet de déplacer, via un câble correspondant, la came 34 du premier système de verrouillage 33 de la position verrouillée à la position déverrouillée dans laquelle l'axe X1 de la came 34 s'aligne avec l'axe X2 de la rainure de dégagement 36 pour permettre de déplacer le panneau de porte 21 par rapport au premier chariot 24, tel que montré sur les figures 5b et 6. Il est à noter que le câble pourra être fixé à une extrémité d'un bras de commande 51 de la came 34.

Simultanément, la came 46 du deuxième système de déverrouillage 42 est également déplacée via un câble correspondant pour faire passer le deuxième chariot 38 de la position haute à la position basse de façon à dégager les dents du pignon d'amortissement 39 par rapport à la crémaillère 40, tel que montré sur les figures 9a et 9b. Le déplacement du panneau de porte 21 pourra ainsi être effectué suivant la direction D sans être gêné par les efforts de friction du pignon 39.

Il est à noter que la présente invention est réversible, en ce sens que par, une opération inverse, il est possible de remonter le panneau de porte 21 sur le chariot 24 par un mouvement du panneau de porte 21 vers le chariot 24 suivant la direction de coulissement D. A cet effet, la came de verrouillage 34 est insérée à l'intérieur de la rainure de dégagement 36 par son extrémité ouverte vers l'arrière du siège puis déplacée jusqu'à ce que la came 34 coopère avec son logement 35. Un actionnement de l'organe de déverrouillage 50' permet de faire tourner la came 34 dans la position verrouillée suivant laquelle l'axe X1 de la came 34 est incliné, voire transversal, par rapport à l'axe X2 de la rainure de dégagement 36.

Les deuxièmes moyens de guidage 29 permettent de faciliter le ré-enclenchement du système de verrouillage 33 en s'assurant que la came 34 est bien alignée avec la rainure de dégagement 36 lors du ré-enclenchement du système.

L'actionnement inverse de l'organe de déverrouillage 50' permet en outre de faire tourner la came 46 vers le haut pour faire remonter le chariot 38 dans la positon haute. On s'assure ainsi que le pignon d'amortissement 39 coopère avec les dents de la crémaillère 40.

Par ailleurs, le dispositif de fermeture 19 comporte un système de blocage 54 permettant de bloquer le panneau de porte 21 dans la position stockée. Ce système de blocage 54 est destiné à être utilisé par le personnel de bord afin de s'assurer notamment que le panneau de porte 21 est en position stockée lorsque le siège est en position TTL (Taxi, Take-off, Landing) prise lors des phases d'arrêt, de décollage, et d'atterrissage de l'avion.

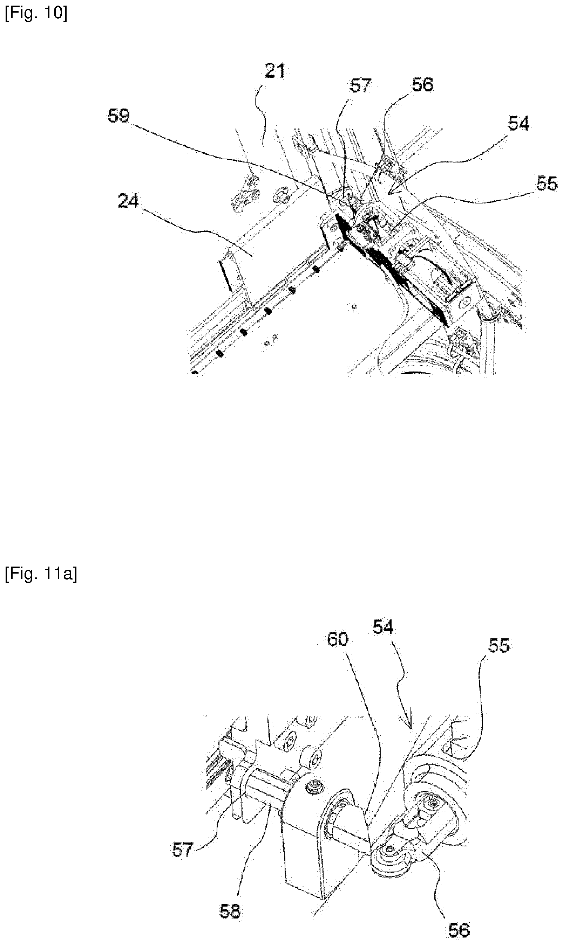

Dans l'exemple représenté en figure 10, le système de blocage 54 comporte un actionneur électrique linéaire 55 ayant une tige 56 mobile en translation entre une position libérée dans laquelle la tige 56 est dégagée d'un logement 57 correspondant ménagé dans une portion du premier chariot 24 et une position de blocage dans laquelle la tige 21 coopère avec le logement 57 du chariot 24 pour empêcher un déplacement du panneau de porte 21, en conditions normales de fonctionnement. La tige 56 de l'actionneur 55 est en l'occurrence orientée perpendiculairement au panneau de porte 21. La tige 56 pourra porter une roue 59 à son extrémité pour faciliter son insertion à l'intérieur du logement 57.

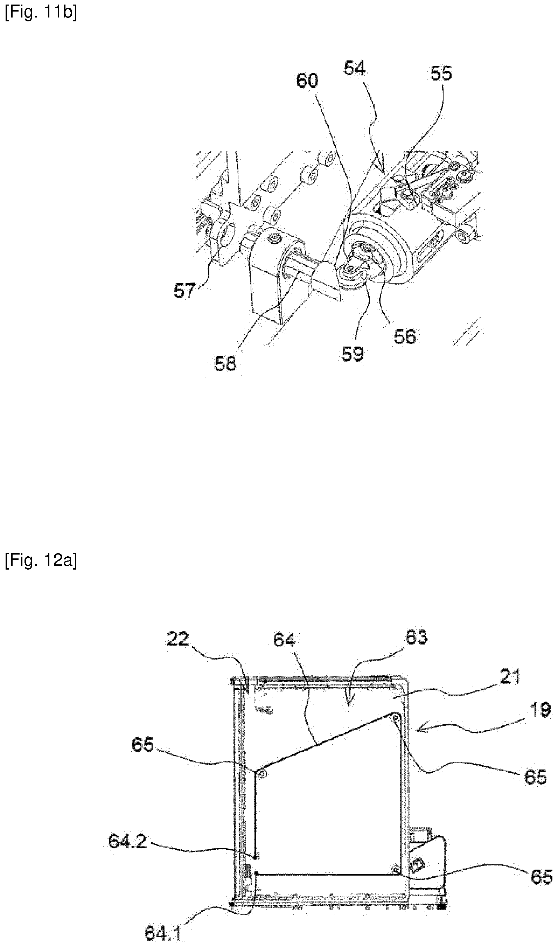

En variante, comme cela est montré sur les figures 11a et 11b, la tige 56 de l'actionneur 55 est orientée parallèlement au panneau de porte 21. Dans ce cas, la tige de l'actionneur 55 est accouplée à un pion 58 par l'intermédiaire d'un dispositif de renvoi formé par une roue 59 disposée à une extrémité de la tige 56 coopérant avec une forme biseauté 60 du pion 58.

Les actionneurs électriques 55 pourront être pilotés par un système centralisé permettant au personnel de bord de bloquer en position stockée l'ensemble des panneaux de portes 21, en une seule opération de commande.

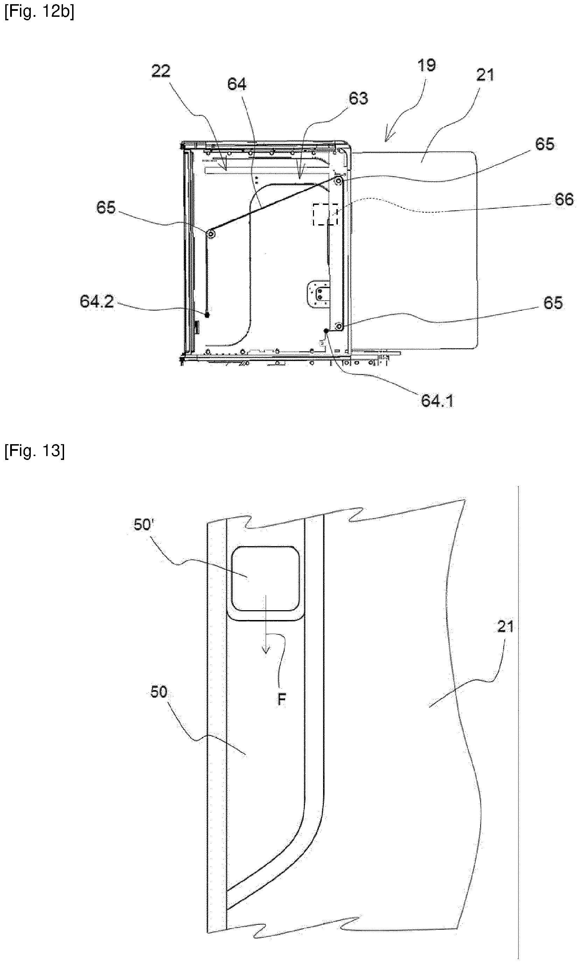

Avantageusement, on prévoit un dispositif de déploiement automatique 63 de la porte, tel que montré sur les figures 12a et 12b. Le dispositif de déploiement automatique 63 comporte une sangle élastique 64 ainsi qu'une pluralité de moyens de guidage de la sangle 64, tels que des poulies 65, disposés entre une première extrémité 64.1 de ladite sangle 64 fixée sur le panneau de porte 21 et une deuxième extrémité 64.2 de ladite sangle 64 fixée sur une partie fixe, par exemple sur une portion interne du logement 22. Lorsque le panneau de porte 21 est en positon stockée, la sangle 64 est tendue (cf. figure 12a). Une action de la part du passager sur un bouton de commande 66 disposé du côté du siège 12 permet de libérer la sangle 64 et de faire passer automatiquement le panneau de porte 21 dans la position déployée (cf. figure 12b).

En variante, le dispositif de déploiement automatique 63 comporte un enrouleur à ressort muni d'un câble ayant une extrémité fixée sur la porte.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres, selon la portée des revendications annexées.

## Revendications

1. Dispositif de fermeture (19), notamment d'un passage (11) situé dans une cabine d'un aéronef, comportant:
- un panneau de porte (21), et
- un premier chariot (24) comprenant des premiers moyens de guidage (25) pour guider en translation ledit premier chariot (24) par rapport à un élément fixe suivant une direction de coulissement (D), et en ce que ledit premier chariot (24) comporte des deuxièmes moyens de guidage (29) pour guider en translation le panneau de porte (21) par rapport audit premier chariot (24) suivant ladite direction de coulissement (D), et
- un premier système de verrouillage (33) apte à prendre un état verrouillé, dans lequel le premier système de verrouillage (33) assure une liaison mécanique entre le panneau de porte (21) et le premier chariot (24), de sorte que le panneau de porte (21) est mobile en translation avec le premier chariot (24) via lesdits premiers moyens de guidage (25), **caractérisé en ce que** ledit premier système de verrouillage (33) étant apte à passer dans un état déverrouillé, notamment en cas de dysfonctionnement, dans lequel le panneau de porte (21) est désolidarisé du premier chariot (24), de sorte que le panneau de porte (21) est seul mobile en translation via lesdits deuxièmes moyens de guidage (29).

2. Dispositif de fermeture selon la revendication 1, **caractérisé en ce que** les premiers moyens de guidage (25) comportent un dispositif à glissière.

3. Dispositif de fermeture selon la revendication 1 ou 2, **caractérisé en ce que** les deuxièmes moyens de guidage (29) comportent une rainure de guidage (30) ménagée dans l'un des éléments parmi le chariot et le panneau de porte (21) et une portion mâle (31) de forme complémentaire ménagée dans l'autre des éléments parmi ledit premier chariot (24) et le panneau de porte (21).

4. Dispositif de fermeture selon la revendication 3, **caractérisé en ce que** la rainure de guidage (30) présente une section en forme de queue d'aronde.

5. Dispositif de fermeture selon l'une quelconque des revendications 1 à 4, **caractérisé en ce que** le premier système de verrouillage (33) comporte une came rotative (34), ladite came (34) étant disposée à l'intérieur d'un logement (35) dans lequel débouche une rainure de dégagement (36).

6. Dispositif de fermeture selon la revendication 5, **caractérisé en ce que** la came (34) est mobile entre:
- une position de verrouillage dans laquelle ladite came (34) vient en butée contre une extrémité de la rainure de dégagement (36), et
- une position de déverrouillage dans laquelle un axe (X1) de la came (34) est aligné avec un axe (X2) de la rainure de dégagement (36) pour permettre un déplacement relatif du panneau de porte (21) par rapport au premier charriot (24).

7. Dispositif de fermeture selon l'une quelconque des revendications 1 à 6, **caractérisé en ce qu'**il comporte un deuxième chariot (38) muni d'un pignon d'amortissement (39) pour amortir un déplacement du panneau de porte (21) destiné à coopérer avec une crémaillère (40) montée sur un élément fixe.

8. Dispositif de fermeture selon la revendication 7, **caractérisé en ce que** le deuxième chariot (38) comporte des moyens de guidage verticaux (41) pour guider en translation verticale ledit deuxième chariot (38) par rapport au panneau de porte 21 et un deuxième système de verrouillage (42) apte à prendre un état verrouillé dans lequel ledit système de verrouillage (42) assure un maintien du deuxième chariot (38) dans une position haute de sorte que des dents du pignon d'amortissement (39) coopèrent avec la crémaillère (40), et un état déverrouillé autorisant un déplacement dudit deuxième chariot (38) vers une position basse de sorte que les dents du pignon d'amortissement (39) sont dégagés de la crémaillère (40).

9. Dispositif de fermeture selon la revendication 8, **caractérisé en ce que** le deuxième système de verrouillage (42) comporte une came (46) et une échancrure (47) correspondante ménagée dans le panneau de porte (21), ladite came (46) étant mobile en rotation entre une première position dans laquelle une première portion périphérique de la came (46) est en appui avec une extrémité haute de l'échancrure (47) de sorte que le deuxième chariot (38) se trouve en position haute et une deuxième position dans laquelle une deuxième portion périphérie de la came (46) est en appui avec l'extrémité haute de l'échancrure (47) de sorte que le deuxième chariot (38) se trouve en position basse.

10. Dispositif de fermeture selon la revendication 5 ou 6 ou 9 **caractérisé en ce que** qu'il comporte un dispositif de commande (49), notamment à câbles et moyens de commande en déplacement, apte à commander un déplacement d'au moins une came d'une position à une autre.

11. Dispositif de fermeture selon l'une quelconque des revendications 1 à 10, **caractérisé en ce qu'**il comporte un système de blocage (54) du panneau de porte (21) dans la position stockée.

12. Dispositif de fermeture selon la revendication 11, **caractérisé en ce que** le système de blocage (54) comporte un actionneur électrique linéaire (55) ayant une tige (56) mobile en translation entre une position libérée dans laquelle la tige (56) est dégagée d'un logement (57) correspondant ménagé dans une portion du premier chariot (24) et une position de blocage dans laquelle la tige (21) coopère avec le logement (57) du premier chariot (24) pour empêcher un déplacement du panneau de porte (21).

13. Dispositif de fermeture selon l'une quelconque des revendications 1 à 12, **caractérisé en ce qu'**il comporte un dispositif de déploiement automatique (63) du panneau de porte (21) d'une position stockée vers une position déployée.

14. Dispositif de fermeture selon la revendication 13, **caractérisé en ce que** le dispositif de déploiement automatique (63) comprend une sangle élastique (64) ainsi qu'une pluralité de moyens de guidage de ladite sangle (64), tels que des poulies (65), disposés entre une première extrémité de ladite sangle (64) fixée sur le panneau de porte (21) et une deuxième extrémité de ladite sangle (64) fixée sur une partie fixe.

## Patentansprüche

1. Verschlussvorrichtung (19), insbesondere für einen Durchgang (11) in einer Flugzeugkabine, umfassend:
- ein Türpaneel (21) und
- einen ersten Schlitten (24) mit ersten Führungsmitteln (25) zum Führen des ersten Schlittens (24) in Translation relativ zu einem festen Element in einer Gleitrichtung (D), und
wobei der erste Schlitten (24) zweite Führungsmittel (29) zum Führen des Türpaneels (21) in Translation relativ zum ersten Schlitten (24) in der Gleitrichtung (D) umfasst, und
- wobei ein erstes Verriegelungssystem (33) in der Lage ist, einen verriegelten Zustand einzunehmen, in welchem das erste Verriegelungssystem (33) eine mechanische Verbindung zwischen dem Türpaneel (21) und dem ersten Schlitten (24) bereitstellt, so dass das Türpaneel (21) mit dem ersten Schlitten (24) über die erste Führungsmittel (25) translatorisch bewegbar ist,
**dadurch gekennzeichnet, dass**
- das erste Verriegelungssystem (33) in der Lage ist, insbesondere im Falle einer Störung in einen entriegelten Zustand überzugehen, in welchem sich das Türpaneel (21) vom ersten Schlitten (24) gelöst wird, so dass nur das Türpaneel (21) über die zweite Führungsmittel (29) translatorisch bewegbar ist.

2. Verschlussvorrichtung nach Anspruch 1, **dadurch gekennzeichnet, dass** die ersten Führungsmittel (25) eine Schienenvorrichtung umfassen.

3. Verschlussvorrichtung nach Anspruch 1 oder 2, **dadurch gekennzeichnet, dass** die zweiten Führungsmittel (29) eine Führungsnut (30) umfassen, die in einem der Elemente von dem Schlitten und dem Türpaneel (21) ausgebildet ist, und ein männlichen Abschnitt (31) mit komplementärer Form im anderen Element von dem ersten Schlitten (24) und dem Türpaneel (21) ausgebildet ist.

4. Verschlussvorrichtung nach Anspruch 3, **dadurch gekennzeichnet, dass** die Führungsnut (30) einen schwalbenschwanzförmigen Querschnitt aufweist.

5. Verschlussvorrichtung nach einem der Ansprüche 1 bis 4, **dadurch gekennzeichnet, dass** das erste Verriegelungssystem (33) einen Drehnocken (34) umfasst, wobei der Nocken (34) innerhalb einer Aufnahme (35), in die eine Freilaufnut (36) mündet, angeordnet ist.

6. Verschlussvorrichtung nach Anspruch 5, **dadurch gekennzeichnet, dass** die Nocke (34) beweglich ist zwischen:
- eine Verriegelungsposition, in der der Nocken (34) an einem Ende der Freilaufnut (36) anliegt, und
- einer Entriegelungsposition, in der eine Achse (X1) des Nockens (34) mit einer Achse (X2) der Freilaufnut (36) ausgerichtet ist, um eine relative Bewegung des Türpaneels (21) in Bezug auf den ersten Schlitten (24) zu ermöglichen.

7. Verschlussvorrichtung nach einem der Ansprüche 1 bis 6, **dadurch gekennzeichnet, dass** sie einen zweiten Schlitten (38) umfasst, der mit einem Dämpfungsritzel (39) zum Zusammenwirken mit einer auf einem festen Element montierten Zahnstange (40) zum Dämpfen einer Bewegung des Türpaneels (21) versehen ist.

8. Verschlussvorrichtung nach Anspruch 7, **dadurch gekennzeichnet, dass** der zweite Schlitten (38) vertikale Führungsmittel (41) zum Führen des zweiten Schlittens (38) in vertikaler Translation relativ zum Türpaneel 21 und ein zweites Verriegelungssystem (42) umfasst, das in der Lage ist, einen verriegelten Zustand, in welchem das Verriegelungssystem (42) den zweiten Schlitten (38) in einer oberen Position hält, so dass die Zähne des Dämpfungsritzels (39) mit der Zahnstange (40) zusammenwirken, und einen entriegelten Zustand, der eine Bewegung des zweiten Schlittens (38) in eine niedrigere Position ermöglicht, so dass die Zähne des Dämpfungsritzels (39) außer Eingriff mit der Zahnstange (40) sind, einzunehmen.

9. Verschlussvorrichtung nach Anspruch 8, **dadurch gekennzeichnet, dass** das zweite Verriegelungssystem (42) einen Nocken (46) und eine entsprechende Kerbe (47) im Türpaneel (21) umfasst, wobei der Nocken (46) zwischen einer ersten Position, in der ein erster Umfangsabschnitt des Nockens (46) an einem oberen Ende der Kerbe (47) anliegt, so dass sich der zweite Schlitten (38) in der oberen Position befindet, und einer zweiten Position, in der ein zweiter Umfangsabschnitt des Nockens (46) am oberen Ende der Kerbe (47) anliegt, so dass sich der zweite Schlitten (38) in der unteren Position befindet, drehbewegbar ist.

10. Verschlussvorrichtung nach Anspruch 5 oder 6 oder 9, **dadurch gekennzeichnet, dass** sie eine Steuervorrichtung (49), insbesondere mit Kabeln und Bewegungssteuermitteln, umfasst, die in der Lage ist, eine Bewegung mindestens eines Nockens von einem Position zu einer anderen zu steuern.

11. Verschlussvorrichtung nach einem der Ansprüche 1 bis 10, **dadurch gekennzeichnet, dass** sie ein Sperrsystem (54) für das Türpaneel (21) in der verstauten Position umfasst.

12. Verschlussvorrichtung nach Anspruch 11, **dadurch gekennzeichnet, dass** das Sperrsystem (54) einen linearen elektrischen Aktuator (55) umfasst, der mit einer Stange (56) versehen ist, die zwischen einer Freigabeposition, in der die Stange (56) außer Eingriff mit einer entsprechenden Aufnahme (57) in einem Abschnitt des ersten Schlittens (24), und einer Sperrposition, in der die Stange (21) mit der Aufnahme (57) des ersten Schlittens (24) zusammenwirkt, um eine Bewegung des Türpaneels (21) zu verhindern, translatorisch bewegbar ist.

13. Verschlussvorrichtung nach einem der Ansprüche 1 bis 12, **dadurch gekennzeichnet, dass** sie eine automatische Ausfahrvorrichtung (63) für das Türpaneel (21) aus einer verstauten Position in eine ausgefahrene Position umfasst.

14. Verschlussvorrichtung nach Anspruch 13, **dadurch gekennzeichnet, dass** die automatische Ausfahrvorrichtung (63) einen elastischen Riemen (64) sowie mehrere Führungsmittel für den Riemen (64), wie beispielsweise Riemenscheiben (65), die zwischen einem ersten, am Türpaneel (21) befestigten Ende des Riemens (64) und einem zweiten, an einem festen Teil befestigten Ende des Riemens (64) angeordnet sind, umfasst.

## Claims

1. A closing device (19), in particular for a passage (11) in an aircraft cabin, comprising:
- a door panel (21), and
- a first carriage (24) comprising first guiding means (25) for guiding said first carriage (24) in translation relative to a fixed element in a sliding direction (D),
and
wherein said first carriage (24) comprises second guiding means (29) for guiding the door panel (21) in translation relative to said first carriage (24) in said sliding direction (D), and
- wherein a first locking system (33) is capable of assuming a locked state, wherein the first locking system (33) provides a mechanical connection between the door panel (21) and the first carriage (24), so that the door panel (21) is movable in translation with the first carriage (24) via said first guiding means (25),
**characterized in that**
- said first locking system (33) being capable of passing into an unlocked state, in particular in the event of a malfunction, in which the door panel (21) is detached from the first carriage (24), so that the door panel (21) is only movable in translation via said second guiding means (29).

2. The closing device according to claim 1, **characterized in that** the first guiding means (25) comprise a sliding device.

3. The closing device according to claim 1 or 2, **characterized in that** the second guiding means (29) comprise a guiding groove (30) formed in one of the elements among the carriage and the door panel (21) and a male portion (31) of complementary shape in the other of said first carriage (24) and the door panel (21).

4. The closing device according to Claim 3, **characterized in that** the guiding groove (30) has a dovetail-shaped section.

5. The closing device according to any one of the claims 1 to 4, **characterized in that** the first locking system (33) comprises a rotary cam (34), said cam (34) being arranged inside a housing (35) into which a clearance groove (36) opens.

6. The closing device according to Claim 5, **characterized in that** the cam (34) is movable between:
- a locking position in which said cam (34) abuts against one end of the clearance groove (36), and
- an unlocking position in which an axis (X1) of the cam (34) is aligned with an axis (X2) of the clearance groove (36) in order to allow relative movement of the door panel (21) with respect to the first carriage (24).

7. The closing device according to any one of the claims 1 to 6, **characterized in that** it comprises a second carriage (38) provided with a damping pinion (39) for cooperating with a rack (40) mounted on a fixed element in order to damp a movement of the door panel (21).

8. The closing device according to Claim 7, **characterized in that** the second carriage (38) comprises vertical guiding means (41) for guiding said second carriage (38) in vertical translation relative to the door panel 21 and a second locking system (42) capable of assuming a locked state in which said locking system (42) maintains the second carriage (38) in an upper position so that the teeth of the damping pinion (39) cooperate with the rack (40), and an unlocked state allowing movement of said second carriage (38) towards a lower position so that the teeth of the damping pinion (39) are disengaged from the rack (40).

9. The closing device according to Claim 8, **characterized in that** the second locking system (42) comprises a cam (46) and a corresponding notch (47) in the door panel (21), said cam (46) being rotatable between a first position in which a first peripheral portion of the cam (46) bears against an upper end of the notch (47) so that the second carriage (38) is in the upper position and a second position in which a second peripheral portion of the cam (46) bears against the upper end of the notch (47) so that the second carriage (38) is in the lower position.

10. The closing device according to Claim 5 or 6 or 9, **characterized in that** it comprises a control device (49), in particular with cables and displacement control means, capable of controlling a displacement of at least one cam from one position to another.

11. The closing device according to any one of the claims 1 to 10, **characterized in that** it comprises a locking system (54) of the door panel (21) in the stored position.

12. The closing device according to Claim 11, **characterized in that** the locking system (54) comprises a linear electric actuator (55) having a rod (56) movable in translation between a cleared position in which the rod (56) is disengaged from a corresponding housing (57) formed in a portion of the first carriage (24) and a locking position in which the rod (21) cooperates with the housing (57) of the first carriage (24) in order to prevent movement of the door panel (21).

13. The closing device according to any one of the claims 1 to 12, **characterized in that** it comprises an automatic deployment device (63) for the door panel (21) from a stored position to a deployed position.

14. The closing device according to claim 13, **characterized in that** the automatic deployment device (63) comprises an elastic strap (64) as well as a plurality of means for guiding said strap (64), such as pulleys (65), arranged between a first end of said strap (64) fixed to the door panel (21) and a second end of said strap (64) fixed to a fixed part.
